# FASCICULE DE BREVET EUROPEEN

(11) **EP 4 486 588 B1**
(45) Date de publication et mention de la délivrance du brevet: **08.10.2025**
(21) Numéro de dépôt: 23706657.6
(22) Date de dépôt: 18.01.2023
(51) Int. Cl.: B60K 6/387, B60K 6/48, B60K 6/547, B60W 10/02, B60W 20/30, B60W 10/113, B60W 20/40, B60W 10/06, B60W 10/08

(54) **PROCÉDÉ DE LIMITATION DE GLISSEMENT EN FONCTION D'UN RAPPORT DE VITESSE LORS D'UNE PHASE DE DÉMARRAGE D'UN MOTEUR THERMIQUE D'UNE CHAÎNE DE TRACTION HYBRIDE**
VERFAHREN ZUR SCHLUPFBEGRENZUNG GEMÄSS EINER ÜBERSETZUNG WÄHREND EINER STARTPHASE EINES VERBRENNUNGSMOTORS EINES HYBRIDANTRIEBSSTRANGS
METHOD FOR LIMITING SLIP ACCORDING TO A GEAR RATIO DURING A START-UP PHASE OF A COMBUSTION ENGINE OF A HYBRID POWERTRAIN

(30) Priorité: 04.03.2022 FR 2201884
(43) Date de publication de la demande: 08.01.2025
(73) Titulaire: Stellantis Auto SAS, 78300 Poissy (FR)
(72) Inventeur: HABBANI, Ridouane, 92600 ASNIERES SUR SEINE (FR); ROCQ, Gaetan, 78125 LA BOISSIERE ECOLE (FR)
(74) Mandataire: PSIP
(86) Numéro de dépôt international: PCT/FR2023/050069
(87) Numéro de publication internationale: WO 2023/166255

(56) Documents cités:
- DE-A1- 102014 107 955
- US-A1- 2015 183 415
- US-B1- 10 112 598
- US-B1- 9 616 884

## Description

La présente invention porte sur un procédé de limitation de glissement en fonction d'un rapport de vitesse lors d'une phase de démarrage d'un moteur thermique d'une chaîne de traction hybride.

De façon connue en soi, une chaîne de traction hybride pour un véhicule automobile peut comporter un moteur thermique et une machine électrique tournante montés sur un train de roues, notamment un train de roues avant.

La machine électrique est disposée en entrée d'une boîte de vitesses comportant au moins un embrayage de changement de rapport de vitesse. Un arbre de sortie de la boîte de vitesses est relié aux roues par l'intermédiaire d'un différentiel et d'une descente de pont.

En outre, un embrayage de connexion et de déconnexion du moteur thermique est apte à sélectivement connecter le moteur thermique à l'arbre d'entrée de la boîte de vitesses lorsque ledit embrayage est à l'état fermé et à isoler le moteur thermique par rapport à l'arbre d'entrée de la boîte de vitesses lorsque ledit embrayage est à l'état ouvert. L'isolation du moteur thermique par rapport à l'arbre d'entrée de la boîte de vitesses (et donc par rapport aux roues) est requise notamment lorsque le véhicule fonctionne dans un mode de roulage électrique pur.

L'ensemble formé par la machine électrique tournante, la boîte de vitesses, ainsi que le ou les embrayages de changement de rapport de vitesse, et l'embrayage de connexion et de déconnexion du moteur thermique pourra être intégré à l'intérieur d'un dispositif de transmission électrique constituant un composant indépendant de la chaîne de traction.

Le moteur thermique pourra être associé à une machine électrique réversible dite "alterno-démarreur". L'alterno-démarreur pourra être accouplé avec le moteur thermique en façade accessoires par l'intermédiaire d'un dispositif de transmission à poulie et courroie. La machine électrique pourra notamment assurer le redémarrage du moteur thermique dans le cadre d'une stratégie d'arrêt et de redémarrage du moteur thermique en fonction des conditions de circulation (système dit "stop and start" en anglais). La machine électrique pourra également participer à la récupération d'énergie lors d'une phase de freinage récupératif.

Lors d'une phase de démarrage du moteur thermique, un glissement entre le régime de la machine électrique tournante et le régime de l'arbre d'entrée de la boîte de vitesses pourra être réalisé via l'embrayage de changement de rapport de vitesse. Cette mise en glissement permet de filtrer les perturbations de couple qui ne seront pas ressenties à la roue mais sur le régime de la machine électrique tournante. Toutefois, cette mise en glissement de l'embrayage de changement de rapport de vitesse induit des pertes énergétiques importantes qui ont un impact négatif sur la consommation de carburant.

En outre l'état de la technique est connu du document US2015183415A1.

L'invention vise à remédier efficacement à cet inconvénient en proposant un procédé de pilotage d'une chaîne de traction hybride de véhicule automobile comportant:
- un moteur thermique, et
- une machine électrique tournante,
- une boîte de vitesses comportant au moins un embrayage de changement de rapport de vitesse, ladite boîte de vitesses comportant un arbre d'entrée auquel est connecté mécaniquement ladite machine électrique tournante et un arbre de sortie relié à des roues du véhicule automobile,
- un embrayage de connexion et de déconnexion du moteur thermique,
- lors d'une demande de démarrage et d'accouplement du moteur thermique avec les roues du véhicule automobile, ledit procédé comporte:
   - une étape de mise en glissement de l'embrayage de changement de rapport de vitesse,
   - ledit procédé comportant une étape d'adaptation d'un écart de régime entre un régime de l'arbre d'entrée de la boîte de vitesses et un régime de la machine électrique tournante en fonction d'un rapport de vitesse engagé, la machine électrique tournante étant pilotée en régulation de régime de façon à adapter l'écart de régime entre le régime de l'arbre d'entrée de la boîte de vitesses et le régime de la machine électrique tournante.

L'invention permet ainsi, en limitant l'écart de régime précité en fonction du rapport de vitesse engagé, de réduire la consommation de carburant lors d'une phase de démarrage du moteur thermique, tout en garantissant un bon confort de conduite.

Selon une mise en œuvre de l'invention, l'écart de régime entre le régime de l'arbre d'entrée de la boîte de vitesses et le régime de la machine électrique tournante est égal ou plus grand pour des rapports de vitesses courts que pour des rapports de vitesses longs.

Selon une mise en œuvre de l'invention, suite à la demande de démarrage et d'accouplement du moteur thermique, ledit procédé comporte une étape de mise au point de léchage de l'embrayage de connexion et de déconnexion du moteur thermique.

Selon une mise en œuvre de l'invention, la boîte de vitesses étant une boîte de vitesses à double embrayages, l'embrayage de la boîte de vitesses mis en glissement dépend d'un rapport de vitesse engagé.

Selon une mise en œuvre de l'invention, une étape de fermeture de l'embrayage de connexion et de déconnexion du moteur thermique se produit lorsqu'un régime du moteur thermique a atteint ou dépassé le régime de la machine électrique tournante.

Selon une mise en œuvre de l'invention, suite à la fermeture de l'embrayage de connexion et de déconnexion du moteur thermique, ledit procédé comporte une étape de fermeture de l'embrayage de changement de rapport de vitesse.

Selon une mise en œuvre de l'invention, un démarrage du moteur thermique est assuré par un alterno-démarreur.

Selon une mise en œuvre de l'invention, ledit procédé comporte une étape de pilotage d'une injection de carburant lorsqu'un régime du moteur thermique a dépassé un régime d'autonomie dudit moteur thermique.

L'invention a également pour objet une architecture de contrôle comportant une pluralité de calculateurs aptes à mettre en œuvre un procédé de pilotage de la chaîne de traction tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une chaîne de traction hybride d'un véhicule automobile mettant en œuvre un procédé selon l'invention de démarrage et d'accouplement d'un moteur thermique avec les roues du véhicule;
[Fig. 2] La figure 2 est une représentation graphique de l'évolution, en fonction du temps, de couple et de régime des différents composants d'une chaîne de traction hybride lors de la mise en œuvre du procédé selon l'invention de démarrage et d'accouplement d'un moteur thermique avec les roues du véhicule;
[Fig. 3] La figure 3 est une représentation graphique de l'évolution d'un niveau d'émission de dioxyde de carbone en fonction d'un écart de régime entre un régime de l'arbre d'entrée de la boîte de vitesses et un régime de la machine électrique tournante respectivement sans et avec la mise en œuvre de la stratégie selon l'invention;
[Fig. 4] La figure 4 est une représentation schématique d'une architecture de contrôle apte à mettre en œuvre le procédé selon l'invention de démarrage et d'accouplement d'un moteur thermique avec les roues du véhicule.

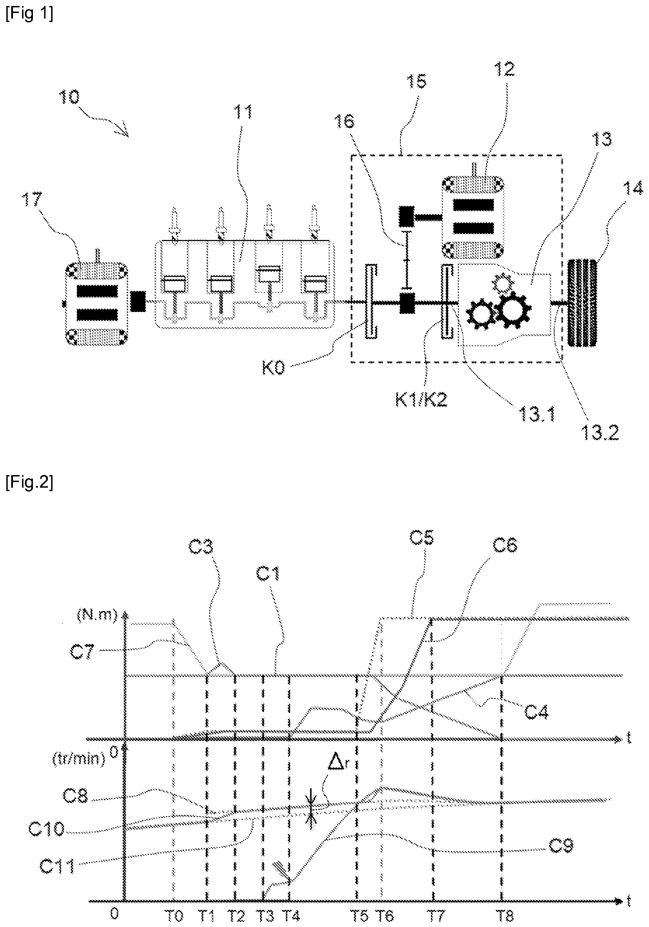

La figure 1 montre une chaîne de traction hybride 10 de véhicule automobile comportant un moteur thermique 11 et une machine électrique tournante 12 montés sur un train de roues 14, notamment un train de roues avant.

La machine électrique 12 est disposée en entrée d'une boîte de vitesses 13 à double embrayages comportant deux embrayages K1, K2 de changement de rapport de vitesse. La boîte de vitesses 13 comporte un arbre d'entrée 13.1 et un arbre de sortie 13.2. L'arbre de sortie 13.2 de la boîte de vitesses 13 est relié aux roues par l'intermédiaire d'un différentiel et d'une descente de pont (non représentés).

En outre, un embrayage K0 de connexion et de déconnexion du moteur thermique 11 est apte à sélectivement connecter le moteur thermique 11 à l'arbre d'entrée 13.1 de la boîte de vitesses 13 lorsque ledit embrayage K0 est à l'état fermé et à isoler le moteur thermique 11 par rapport à l'arbre d'entrée 13.1 de la boîte de vitesses 13 lorsque ledit embrayage K0 est à l'état ouvert. A cet effet, l'embrayage K0 est disposé entre le moteur thermique 11 et la machine électrique tournante 12. L'isolation du moteur thermique 11 par rapport à l'arbre d'entrée 13.1 de la boîte de vitesses et donc par rapport aux roues est requise notamment lorsque le véhicule fonctionne dans un mode de roulage électrique pur.

La machine électrique tournante 12 est montée entre l'embrayage K0 et les embrayages K1, K2 de changement de rapport de la boîte de vitesses 13. La machine électrique tournante 12 pourra être connectée sur l'arbre d'entrée 13.1 de la boîte de vitesses 13 par l'intermédiaire d'un ensemble réducteur 16 à engrenages ou à courroie.

La machine électrique tournante 12 est apte à transformer une énergie électrique issue d'une batterie en une énergie mécanique pour assurer une traction du véhicule. La machine électrique tournante 12 est également apte à fonctionner dans un mode générateur dans lequel la machine électrique tournante 12 transforme une énergie mécanique en une énergie électrique permettant de recharger la batterie, notamment lors d'une phase de freinage récupératif.

L'ensemble formé par la machine électrique tournante 12, la boîte de vitesses 13, ainsi que les embrayages K1, K2 de changement de rapport de vitesse, et l'embrayage K0 de connexion et de déconnexion du moteur thermique 11 pourra être intégré à l'intérieur d'un dispositif de transmission électrique 15 constituant un composant indépendant de la chaîne de traction 10.

Le moteur thermique 11 est associé à une machine électrique tournante réversible 17 dite "alterno-démarreur". L'alterno-démarreur 17 pourra être accouplé avec le moteur thermique 11 en façade accessoires par l'intermédiaire d'un dispositif de transmission à poulie et courroie. L'alterno-démarreur 17 pourra notamment assurer le redémarrage du moteur thermique 11 dans le cadre d'une stratégie d'arrêt et de redémarrage du moteur thermique 11 en fonction des conditions de circulation (système dit "stop and start" en anglais). L'alterno-démarreur 17 pourra également participer à la récupération d'énergie lors d'un freinage récupératif.

On décrit ci-après en référence avec la figure 2, la mise en œuvre d'un procédé selon l'invention permettant de piloter le démarrage et l'accouplement du moteur thermique 11 avec les roues du véhicule. La courbe C1 correspond à l'évolution temporelle d'un couple cible souhaité par le conducteur. La courbe C3 correspond à l'évolution temporelle du couple de la machine électrique tournante 12. La courbe C4 correspond à l'évolution temporelle du couple du moteur thermique 11. La courbe C5 correspond à l'évolution temporelle du couple cible de l'embrayage K0 de connexion et de déconnexion du moteur thermique 11. La courbe C6 correspond à l'évolution temporelle du couple réel de l'embrayage K0 de connexion et de déconnexion du moteur thermique 11. La courbe C7 correspond à l'évolution temporelle du couple réel d'un embrayage K1, K2 de changement de rapport de vitesse.

La courbe C8 correspond à l'évolution temporelle de la vitesse cible du moteur thermique 11. La courbe C9 correspond à l'évolution temporelle de la vitesse réelle du moteur thermique 11. La courbe C10 correspond à l'évolution temporelle de la vitesse de la machine électrique tournante 12. La courbe C11 correspond à l'évolution temporelle de la vitesse de l'arbre d'entrée 13.1 de la boîte de vitesses 13.

A l'état initial, un embrayage K1 ou K2 de la boîte de vitesses 13 correspondant au rapport engagé est fermé (cf. courbe C7) tandis que l'embrayage K0 de connexion et de déconnexion du moteur thermique 11 est à l'état ouvert (cf. courbe C6), le moteur thermique 11 étant déconnecté des roues du véhicule.

Lors d'une demande de démarrage et d'accouplement du moteur thermique 11 avec les roues du véhicule automobile se produisant à l'instant T0, l'embrayage K0 de connexion et de déconnexion du moteur thermique 11 est mis au point de léchage (cf. courbe C6). La mise au point de léchage permet de faire passer uniquement quelque Newtons-mètres par l'embrayage K0, notamment de l'ordre de 3N.m soit un couple moins important que lorsque l'embrayage est mis en glissement. La mise au point de léchage de l'embrayage K0 permet d'améliorer la dynamique de commande en réduisant la durée nécessaire pour assurer la fermeture de l'embrayage K0.

En outre, l'embrayage K1 ou K2 de la boîte de vitesses 13 est mis en glissement (cf. courbe C7). La boîte de vitesses 13 étant à double embrayages, l'embrayage K1 ou K2 de la boîte de vitesses 13 mis en glissement dépend du rapport de vitesse engagé.

Avantageusement, un écart de régime Δr entre un régime de l'arbre d'entrée 13.1 de la boîte de vitesses et un régime de la machine électrique tournante 12 est adapté en fonction d'un rapport de vitesse engagé. Cet écart de régime Δr est égal ou plus grand pour les rapports de vitesses courts que pour les rapports de vitesses longs.

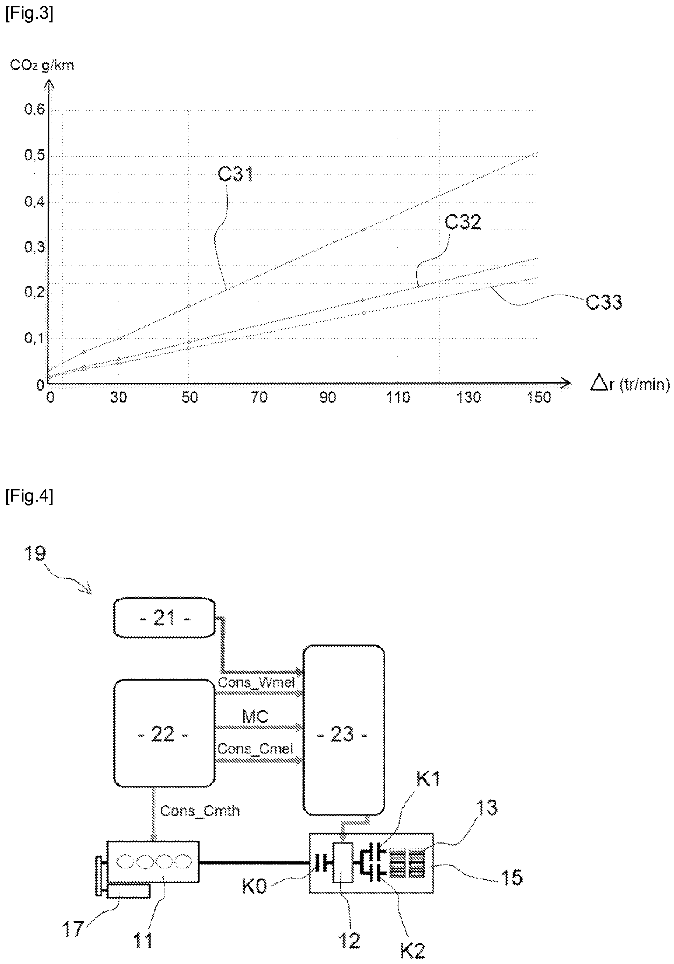

Comme cela est illustré par la figure 3, si l'écart de régime Δr est constant sur l'ensemble des rapports de vitesse, le niveau d'émission de dioxyde de carbone peut atteindre 0.5g/km pour un écart de régime Δr valant 150tours/min (cf. courbe C31).

Dans le cas où l'écart de régime Δr est plus grand pour les rapports courts (1, 2, et 3) que pour les rapports longs (4, 5, et éventuellement 6), les émissions de dioxyde de carbone et donc la consommation sont réduites quasiment de moitié (cf. courbe C32) . Une observation analogue peut être faite lorsque la stratégie est mise en œuvre avec les rapports de première et de seconde (cf. courbe C33). Suivant certains modes de réalisation, l'écart de régime Δr pourra être nul pour les rapports longs.

En effet, si le glissement est essentiel pour l'agrément de conduite sur les rapports courts (1, 2, et éventuellement 3), il l'est moins pour les rapports longs qui présentent par définition des rapports de démultiplication plus petits engendrant moins d'erreur de couple à la roue.

Afin de limiter l'écart de régime Δr, il est possible de piloter en régime la machine électrique tournante 12 afin que son régime soit proche du régime de l'arbre d'entrée 13.1 de la boîte de vitesses.

Entre les instants T1 et T2, le procédé comporte une étape d'augmentation temporaire d'un couple de la machine électrique tournante 12 (cf. courbe C3) de façon à découpler le régime de la machine électrique tournante 12 par rapport au régime de l'arbre d'entrée 13.1 de la boîte de vitesses 13 (cf. courbes C10 et C11). L'augmentation temporaire du couple de la machine électrique tournante 12 se produit pendant une durée courte par exemple de l'ordre de 100ms. Le surcouple maximal appliqué pendant cette durée est de l'ordre de 10N.m. Il est à noter que le régime de l'arbre d'entrée 13.1 de la boîte de vitesses 13 correspond au régime des roues du véhicule au rapport de démultiplication près de la boîte de vitesses 13.

A l'instant T3, on commande une étape de démarrage du moteur thermique 11 (cf. courbe C9). Ce démarrage est assuré par l'alterno-démarreur 17. Lorsque le régime du moteur dépasse son régime d'autonomie situé aux alentours de 600 tours/min, on commande l'injection de carburant du moteur thermique 11 à l'instant T4.

Entre les instants T5 et T6, lorsqu'un régime du moteur thermique 11 a atteint ou dépassé le régime de la machine électrique tournante 12, on commande une fermeture de l'embrayage K0 de connexion et de déconnexion du moteur thermique 11 (cf. courbe C5). A l'instant T7, l'embrayage K0 est effectivement fermé (cf. courbe C6).

La machine électrique tournante 12 est pilotée en régulation de régime au moins entre le moment où l'embrayage K1 ou K2 de la boîte de vitesses 13 est mis en glissement et le moment de la fermeture de l'embrayage K0 de connexion et de déconnexion du moteur thermique 11.

Suite à la fermeture de l'embrayage K0 de connexion et de déconnexion du moteur thermique 11, le procédé comporte une étape de commande de fermeture de l'embrayage K1 ou K2 de changement de rapport de vitesse à l'instant T8.

Entre la fermeture de l'embrayage K0 de connexion et de déconnexion du moteur thermique 11 et la fermeture de l'embrayage K1 ou K2 de changement de rapport de vitesse, la machine électrique tournante 12 pourra également être pilotée en régulation de régime. Après la fermeture de l'embrayage K1 ou K2 de changement de rapport de vitesse, la machine électrique tournante 12 pourra être pilotée en régulation de couple. De façon classique, les régulations en régime ou en couple de la machine électrique tournante 12 sont assurées par des boucles de régulation de type PID pour "Proportionnel Intégral Dérivé".

La figure 4 montre une architecture de contrôle 19 comportant une pluralité de calculateurs aptes à mettre en œuvre le procédé selon l'invention de pilotage de la chaîne de traction 10.

Plus précisément, un calculateur de transmission 21 associé au dispositif 15 est apte à contrôler l'état de couple des embrayages K0, K1, K2. Un calculateur de chaîne de traction 22 est apte à envoyer une consigne de couple Cons_Cmth au moteur thermique 11. Le calculateur de chaîne de traction 22 est également apte à définir un mode de contrôle MC en régime ou en couple de la machine électrique tournante 12 et à envoyer une consigne de régime Cons_Wmel ou de couple Cons_Cmel correspondant au mode de contrôle MC sélectionné. Un calculateur de machine électrique tournante 23 met en œuvre: soit le pilotage en régulation de régime de la machine électrique tournante 12 lorsque le mode de contrôle en régime est sélectionné par le calculateur de chaîne de traction 22; soit le pilotage en régulation de couple de la machine électrique tournante 12 lorsque le mode de contrôle en couple est sélectionné par le calculateur de chaîne de traction 22.

Le pilotage en régime de la machine électrique tournante 12 permet d'adapter l'écart de régime Δr entre le régime de l'arbre d'entrée 13.1 de la boîte de vitesses et le régime de la machine électrique tournante 12 lors de la mise en glissement de l'embrayage K1/K2 de changement de rapport de vitesse.

De façon optionnelle, le calculateur de transmission 21 pourra communiquer au calculateur de machine électrique tournante 23 des informations relatives à l'état de perturbations et d'inertie du dispositif de transmission électrique 15.

En variante, l'invention pourra également être mise en œuvre avec une boîte de vitesses à simple embrayage.

## Revendications

1. Procédé de pilotage d'une chaîne de traction hybride (10) de véhicule automobile comportant:
- un moteur thermique (11), et
- une machine électrique tournante (12),
- une boîte de vitesses (13) comportant au moins un embrayage (K1, K2) de changement de rapport de vitesse, ladite boîte de vitesses (13) comportant un arbre d'entrée (13.1) auquel est connecté mécaniquement ladite machine électrique tournante (12) et un arbre de sortie (13.2) relié à des roues du véhicule automobile,
- un embrayage (K0) de connexion et de déconnexion du moteur thermique,
- lors d'une demande de démarrage et d'accouplement du moteur thermique (11) avec les roues du véhicule automobile, ledit procédé comporte:
- une étape de mise en glissement de l'embrayage (K1, K2) de changement de rapport de vitesse,
**caractérisé en ce que** ledit procédé comporte une étape d'adaptation d'un écart de régime (Δr) entre un régime de l'arbre d'entrée (13.1) de la boîte de vitesses (13) et un régime de la machine électrique tournante (12) en fonction d'un rapport de vitesse engagé, la machine électrique tournante (12) étant pilotée en régulation de régime de façon à adapter l'écart de régime (Δr) entre le régime de l'arbre d'entrée (13.1) de la boîte de vitesses (13) et le régime de la machine électrique tournante (12).

2. Procédé selon la revendication 1, **caractérisé en ce que** l'écart de régime (Δr) entre le régime de l'arbre d'entrée (13.1) de la boîte de vitesses (13) et le régime de la machine électrique tournante (12) est égal ou plus grand pour des rapports de vitesses courts que pour des rapports de vitesses longs.

3. Procédé selon l'une quelconque des revendications 1 à 2, **caractérisé en ce que** suite à la demande de démarrage et d'accouplement du moteur thermique (11), ledit procédé comporte une étape de mise au point de léchage de l'embrayage (K0) de connexion et de déconnexion du moteur thermique (11).

4. Procédé selon l'une quelconque des revendications 1 à 3, **caractérisé en ce que** la boîte de vitesses (13) étant une boîte de vitesses à double embrayages (K1, K2), l'embrayage (K1, K2) de la boîte de vitesses (13) mis en glissement dépend d'un rapport de vitesse engagé.

5. Procédé selon l'une quelconque des revendications 1 à 4, **caractérisé en ce qu'**une étape de fermeture de l'embrayage (K0) de connexion et de déconnexion du moteur thermique (11) se produit lorsqu'un régime du moteur thermique (11) a atteint ou dépassé le régime de la machine électrique tournante (12).

6. Procédé selon la revendication 5, **caractérisé en ce que** suite à la fermeture de l'embrayage (K0) de connexion et de déconnexion du moteur thermique (11), ledit procédé comporte une étape de fermeture de l'embrayage (K1, K2) de changement de rapport de vitesse.

7. Procédé selon l'une quelconque des revendications 1 à 6, **caractérisé en ce qu'**un démarrage du moteur thermique (11) est assuré par un alterno-démarreur (17).

8. Procédé selon la revendication 7, **caractérisé en ce qu'**il comporte une étape de pilotage d'une injection de carburant lorsqu'un régime du moteur thermique (11) a dépassé un régime d'autonomie dudit moteur thermique (11).

9. Architecture de contrôle (19) **caractérisée en ce qu'**elle comporte une pluralité de calculateurs (21, 22, 23) aptes à mettre en œuvre un procédé de pilotage de la chaîne de traction (10) tel que défini selon l'une quelconque des revendications précédentes.

## Patentansprüche

1. Verfahren zum Steuern eines Hybridantriebsstrangs (10) eines Kraftfahrzeugs, umfassend:
- eine Wärmekraftmaschine (11) und
- einer rotierenden elektrischen Maschine (12),
- ein Getriebe (13), das mindestens eine Kupplung (K1, K2) zum Wechseln des Übersetzungsverhältnisses umfasst, wobei das Getriebe (13) eine Eingangswelle (13.1), mit der die rotierende elektrische Maschine (12) mechanisch verbunden ist, und eine Ausgangswelle (13.2) umfasst, die mit den Rädern des Kraftfahrzeugs verbunden ist,
- eine Kupplung (KO) zum Zu- und Abschalten der Wärmekraftmaschine,
- auf Anforderung zum Starten und Kuppeln der Wärmekraftmaschine (11) mit den Rädern des Kraftfahrzeugs umfasst das Verfahren:
- einen Schritt des Rutschens der Gangwechselkupplung (K1, K2),
**dadurch**
**gekennzeichnet , dass** das Verfahren einen Schritt zum Anpassen einer Drehzahldifferenz (Ar) zwischen einer Drehzahl der Eingangswelle (13.1) des Getriebes (13) und einer Drehzahl der rotierenden elektrischen Maschine (12) als Funktion eines eingelegten Übersetzungsverhältnisses umfasst, wobei die rotierende elektrische Maschine (12) in der Drehzahlregelung gesteuert wird, um die Drehzahldifferenz (Ar) zwischen der Drehzahl der Eingangswelle (13.1) des Getriebes (13) und der Drehzahl der rotierenden elektrischen Maschine (12).

2. Verfahren nach Anspruch 1, **dadurch gekennzeichnet, dass** die Drehzahldifferenz (Ar) zwischen der Drehzahl der Eingangswelle (13.1) des Getriebes (13) und der Drehzahl der rotierenden elektrischen Maschine (12) gleich oder größer ist für Verhältnisse von
Gänge als bei langen Übersetzungsverhältnissen.

3. Verfahren nach einem der Ansprüche 1 bis 2, **dadurch gekennzeichnet, dass** es nach der Aufforderung zum Starten und Kuppeln der Wärmekraftmaschine (11) einen Schritt zum Einstellen des Ansprechens der Kupplung (KO) zum Zu- und Abkuppeln der Wärmekraftmaschine (11) umfasst.

4. Verfahren nach einem der Ansprüche 1 bis 3, **dadurch gekennzeichnet, dass** das Getriebe (13) ein Doppelkupplungsgetriebe (K1, K2) ist, wobei das Rutschen der Kupplung (K1, K2) des Getriebes (13) abhängig von einer eingelegten Gangstufe erfolgt.

5. Verfahren nach einem der Ansprüche 1 bis 4, **dadurch gekennzeichnet, dass**
dass ein Schritt des Schließens der Kupplung (KO) zum Zu- und Abschalten der Wärmekraftmaschine (11) erfolgt, wenn eine Drehzahl der Wärmekraftmaschine (11) die Drehzahl der rotierenden elektrischen Maschine (12) erreicht oder überschritten hat.

6. Verfahren nach Anspruch 5, **dadurch gekennzeichnet, dass** es nach dem Schließen 10 der Kupplung (KO) zum Zu- und Abkuppeln der Wärmekraftmaschine (11) einen Schritt des Schließens der Kupplung (K1, K2) zum Gangwechsel umfasst.

7. Verfahren nach einem der Ansprüche 1 bis 6, **dadurch gekennzeichnet, dass** der Start der Wärmekraftmaschine (11) durch einen Anlassergenerator gewährleistet wird .
(17).

8. Verfahren nach Anspruch 7, **dadurch gekennzeichnet, dass** es einen Schritt zum Steuern einer Kraftstoffeinspritzung umfasst, wenn eine Drehzahl der Wärmekraftmaschine (11) eine Autonomiedrehzahl der Wärmekraftmaschine (11) überschritten hat.

9. Steuerungsarchitektur (19), **dadurch gekennzeichnet, dass** sie eine Vielzahl von Computern (21, 22, 23), die in der Lage sind, ein Verfahren zum Steuern des Antriebsstrangs (10) gemäß der Definition in einem der vorhergehenden Ansprüche zu implementieren.

## Claims

1. Method for controlling a hybrid powertrain (10) of a motor vehicle comprising:
- a heat engine (11), and
- a rotating electrical machine (12),
- a gearbox (13) comprising at least one clutch (K1, K2) for changing gear ratio, said gearbox (13) comprising an input shaft (13.1) to which said rotating electrical machine (12) is mechanically connected and an output shaft (13.2) connected to wheels of the motor vehicle,
- a clutch (KO) for connecting and disconnecting the thermal engine,
- upon request to start and couple the thermal engine (11) with the wheels of the motor vehicle, said method comprises:
- a step of slipping the gear change clutch (K1, K2),
**characterized in that** said method comprises a step of adapting a speed difference (Ar) between a speed of the input shaft (13.1) of the gearbox (13) and a speed of the rotating electrical machine (12) as a function of a gear ratio engaged, the rotating electrical machine (12) being controlled in speed regulation so as to adapt the speed difference (Ar) between the speed of the input shaft (13.1) of the gearbox (13) and the speed of the rotating electrical machine (12).

2. Method according to claim 1, **characterized in that** the speed difference (Ar) between the speed of the input shaft (13.1) of the gearbox (13) and the speed of the rotating electrical machine (12) is equal to or greater for ratios of gears than for long gear ratios.

3. Method according to any one of claims 1 to 2, **characterized in that** following the request to start and couple the heat engine (11), said method comprises a step of adjusting the licking of the clutch (KO) for connection and disconnection of the heat engine (11).

4. Method according to any one of claims 1 to 3, **characterized in that** the gearbox (13) being a dual clutch gearbox (K1, K2), the clutch (K1, K2) of the gearbox (13) being slipped depends on a gear ratio engaged.

5. Method according to any one of claims 1 to 4, **characterized in that** that a step of closing the clutch (KO) for connecting and disconnecting the thermal engine (11) occurs when a speed of the thermal engine (11) has reached or exceeded the speed of the rotating electrical machine (12).

6. Method according to claim 5, **characterized in that** following the closing 10 of the clutch (KO) for connecting and disconnecting the thermal engine (11), said method comprises a step of closing the clutch (K1, K2) for changing gear.

7. Method according to any one of claims 1 to 6, **characterized in that** a start of the thermal engine (11) is ensured by an alternator -starter (17).

8. Method according to claim 7, **characterized in that** it comprises a step of controlling a fuel injection when a speed of the thermal engine (11) has exceeded an autonomy speed of said thermal engine (11).

9. Control architecture (19) **characterized in that** it comprises a plurality of computers (21, 22, 23) capable of implementing a method for controlling the powertrain (10) as defined according to any one of the preceding claims.
